# EUROPÄISCHE PATENTANMELDUNG

(11) **EP 2 623 346 A2**
(43) Veröffentlichungstag der Anmeldung: **07.08.2013**
(21) Anmeldenummer: 12008176.5
(22) Anmeldetag: 07.12.2012
(51) Int. Cl.: B60H 1/32, B60H 1/00

(54) **Einrichtung und Verfahren zur Klimatisierung eines Innenraumes**

(30) Priorität: 02.02.2012 DE 102012001918
(71) Anmelder: HAPPICH GmbH, 42119 Wuppertal (DE)
(72) Erfinder: Bednarz, Joachim, D-42287 Wuppertal (DE); Pelzer, Helmut, D-58313 Herdecke (DE); Kerskes, Henner, D-70563 Stuttgart (DE)

(57) **Zusammenfassung**

Die Erfindung bezieht sich auf eine Einrichtung 10 zur Klimatisierung eines Innenraumes eines Fahrzeuges, einer Maschine, eines Gebäudes od. dgl., insbesondere eines Führerhauses eines Lastkraftwagen, wobei z.B. das Fahrzeug einen Adsorber- oder Absorber- Wärmepumpenkreislauf 11 mit wenigstens einem Verdampfer 12, Energiespeicher 13 und Kondensator 14 aufweist, wobei die dem Innenraum z.B. des Fahrzeuges zuzuführende Luft am Verdampfer 12 abkühlbar ist und der Kondensator 14 eine Abwärme aufweist, wobei der Energiespeicher 13 mit Zeolith- Granulat gefüllt ausgebildet ist. Es ist dabei erfindungsgemäß vorgesehen, dass die Abgaswärmeübertragung der Antriebs- oder sonstigen Verbrennungsmaschine über wenigstens einen Wärmeübertrager 15 zur Einbringung von Wärme in den mit Zeolith- Granulat gefüllten Energiespeicher 13 ausgebildet ist. Die Erfindung bezieht sich außerdem auf ein Verfahren zur Klimatisierung eines solchen Innenraumes eines Fahrzeuges, einer Maschine, eines Gebäudes od. dgl., insbesondere eines Führerhauses eines Lastkraftwagen.

## Beschreibung

Die Erfindung bezieht sich auf eine Einrichtung zur Klimatisierung eines Innenraumes eines Fahrzeuges, einer Maschine, eines Gebäudes od. dgl., insbesondere eines Führerhauses eines Lastkraftwagen, wobei z.B. das Fahrzeug einen Adsorber- oder Absorber- Wärmepumpenkreislauf mit wenigstens einem Verdampfer, Energiespeicher und Kondensator aufweist, wobei die dem Innenraum z.B. des Fahrzeuges zuzuführende Luft am Verdampfer abkühlbar ist und der Kondensator eine Abwärme aufweist, wobei der Energiespeicher mit Zeolith- Granulat gefüllt ausgebildet ist. Die Erfindung bezieht sich außerdem auf ein Verfahren zur Klimatisierung eines solchen Innenraumes eines Fahrzeuges, einer Maschine, eines Gebäudes od. dgl., insbesondre eines Führerhauses eines Lastkraftwagen.

Es sind dazu aus der Praxis bzw. aus dem Stand der Technik verschiedene derartige Einrichtungen und Verfahren zur Klimatisierung eines Innenraumes z.B. eines Fahrzeuges bekannt. Bei den bekannten Einrichtungen und Verfahren ist insbesondere der zusätzliche Energieaufwand für die Einbringung von Wärme in den mit Zeolith- Granulat gefüllten Energiespeicher nachteilig, beispielsweise kann zur thermischen Generation ein Latentwärmespeicher während der Fahrt gekühlt werden bis Wasser gefriert, dieses System funktioniert aber nur in Verbindung mit einer bestehenden Klimaanlage und ist nur zum Kühlen geeignet.

Zum Stand der Technik wird außerdem auf die DE 195 45 450 C2 verwiesen. Hier ist beschrieben eine Einrichtung zur Klimatisierung eines Fahrzeuginnenraumes eines elektrisch betriebenen Fahrzeuges, wobei das Fahrzeug mit mindesten einem Bremswiderstand ausgerüstet ist und einen Adsorber- oder Absorber- Wärmepumpenkreislauf mit Verdampfer, Austreiber und Kondensator aufweist und wobei die dem Fahrzeuginnenraum zuzuführende Luft am Verdampfer abkühlbar und die Abwärme des Kondensators an die Außenatmosspäre abführbar ist. Dabei ist vorgesehen, dass der Bremswiderstand die Heizquelle für den Austreiber ist. Es ist dabei ein Adsorber- Wärmepumpenkreislauf vorgesehen mit einem mit Zeolithen gefüllten Gehäuse als Austreiber. Nachteilig bei dieser Anordnung ist insbesondere die Einschränkung der Anwendung auf elektrisch betriebene Fahrzeuge.

Ausgehend von diesen bekannten Einrichtungen und Verfahren zur Klimatisierung eines Innenraumes z.B. eines Fahrzeuges, liegt der Erfindung die Aufhabe zu Grunde, die bekannten Anordnungen und Verfahren unter Beibehaltung der bisherigen Vorteile in der Weise zu verbessern bzw. weiter zu entwickeln, dass die Nachteile der bekannten Ausführungsformen vermieden werden, wobei insbesondere ein zusätzlicher Energieaufwand für die Einbringung von Wärme in den mit Zeolith- Granulat gefüllten Energiespeicher vermieden werden soll.

Die Aufgabe wird erfindungsgemäß bezüglich der Einrichtung zur Klimatisierung eines Innenraumes z.B. eines Fahrzeuges dadurch gelöst, dass die Abgaswärmeübertragung der Antriebs- oder sonstigen Verbrennungsmaschine über wenigstens einen Wärmeübertrager zur Einbringung von Wärme in den mit Zeolith- Granulat gefüllten Energiespeicher ausgebildet ist. Auf diese Weise wird erstmalig mit einfachen Mitteln eine Einrichtung zur Klimatisierung eines Innenraumes z.B. eines Fahrzeuges geschaffen, bei der bei der thermischen Generation die Desorption der Zeolithe durch Abgaswärme erfolgt, d.h.. es entsteht kein zusätzlicher Energieaufwand, so dass kein Eingriff in die bestehende Fahrzeugtechnik notwendig ist. Der Vorteil besteht hier also insbesondere in der Nutzung der Abgaswärme von Antriebs- oder sonstigen Verbrennungsmaschinen zur Trocknung des Zeolith-Silikagel-Materials. Die bei den Antriebs- oder sonstigen Verbrennungsmaschinen entstehenden Abgase werden also nicht wie sonst üblich ohne weitere Nutzung an die Umwelt abgegeben. Es wird hier vielmehr diese Wärme über geeignete Wärmetauscher dem Abgasstrom entnommen, und zur Desorption (Regeneration des Zeolith-Silikalgel-Materials) nach Heizen oder Kühlen z.B. einer Kabine genutzt. Da die Abgaswärme beim Betrieb der Antriebs- oder sonstigen Verbrennungsmaschinen zwangsläufig anfällt, ist hier keine weitere, den Wirkungsgrad verschlechternde oder zusätzlich kostenintensiv zu erzeugende Energie erforderlich. Der Vorteil eines solchen Systemes ist, dass nach Abstellen der Antriebs- oder sonstigen Verbrennungsmaschinen über einen langen Zeitraum z.B. eine Kabine zu klimatisieren ist.

Bei der bevorzugten Ausführungsform der vorliegenden Erfindung weist die Einrichtung zwei unabhängig arbeitende mit Zeolith- Granulat gefüllte Energiespeicher auf. Bei dieser Ausführungsform kann je einer der Energiespeicher, je nach Ladezustand, auch schon während des Betriebes der Antriebsmaschine zur Kühlung und damit zur Entlastung der Klimaanlage genutzt werden.

Es empfiehlt sich nach einem weiteren Merkmal der vorliegenden Erfindung, dass die Einrichtung zur Abgabe der entstehenden Abwärme an die Umgebung ausgebildet ist. In diesem Fall wird die entstehende Abwärme allerdings ungenutzt abgeführt.

Bei einer anderen Ausführungsform der vorliegenden Erfindung ist vorgesehen; dass die Einrichtung zur Wiederzuführung der Abwärme an den Kreislauf ausgebildet ist. Dadurch wird der Wirkungsgrad noch zusätzlich verbessert.

Nach einem bezüglich der Einrichtung letzten Merkmal der vorliegenden Erfindung ist vorgesehen, dass die Einrichtung zur Zuführung der Abwärme zwecks Aufheizung wenigstens eines separaten Wärmespeichers ausgebildet ist. Dieser separate Wärmespeicher kann ggfs. als latenter Wärmespeicher die Heizung unterstützen, wenn die Verbrennungsmaschine nicht arbeitet.

Die Aufgabe wird erfindungsgemäß bezüglich des Verfahrens zur Klimatisierung eines Innenraumes z.B. eines Fahrzeuges dadurch gelöst, dass zur Einbringung von Wärme in den mit Zeolith- Granulat gefüllten Energiespeicher die Abgaswärmeübertragung der Antriebs- oder sonstigen Verbrennungsmaschine über wenigstens einen Wärmeübertrager erfolgt. Bezüglich der sich dabei ergebenden Vorteile wird zur Vermeidung von Wiederholungen auf die Vorteile der erfindungsgemäßen Einrichtung verwiesen.

Bei der bezüglich des Verfahrens bevorzugten Ausführungsform der vorliegenden Erfindung erfolgt die Energiespeicherung über zwei unabhängig arbeitende mit Zeolith- Granulat gefüllte Energiespeicher. Es kann dabei vorgesehen sein, dass eine Abgabe der entstehenden Abwärme an die Umgebung erfolgt, alternativ kann vorgesehen sein, dass eine Wiederzuführung der entstehenden Abwärme an den Kreislauf erfolgt oder dass nach einem letzten Merkmal der vorliegenden Erfindung eine Zuführung der Abwärme zwecks Aufheizung wenigstens eines separaten Wärmespeichers erfolgt.

Die Erfindung ist in den Figuren der Zeichnung in einem Ausführungsbeispiel dargestellt. Es zeigen:
- Fig. 1: eine schematische Prinzipdarstellung der erfindungsgemäßen Einrichtung zur Klimatisierung eines Innenraumes z.B. eines Fahrzeuges während der Regeneration,
- Fig. 2: die schematische Prinzipdarstellung der erfindungsgemäßen Einrichtung zur Klimatisierung eines Innenraumes z.B. eines Fahrzeuges gemäß Fig. 1 während der Adsorption.

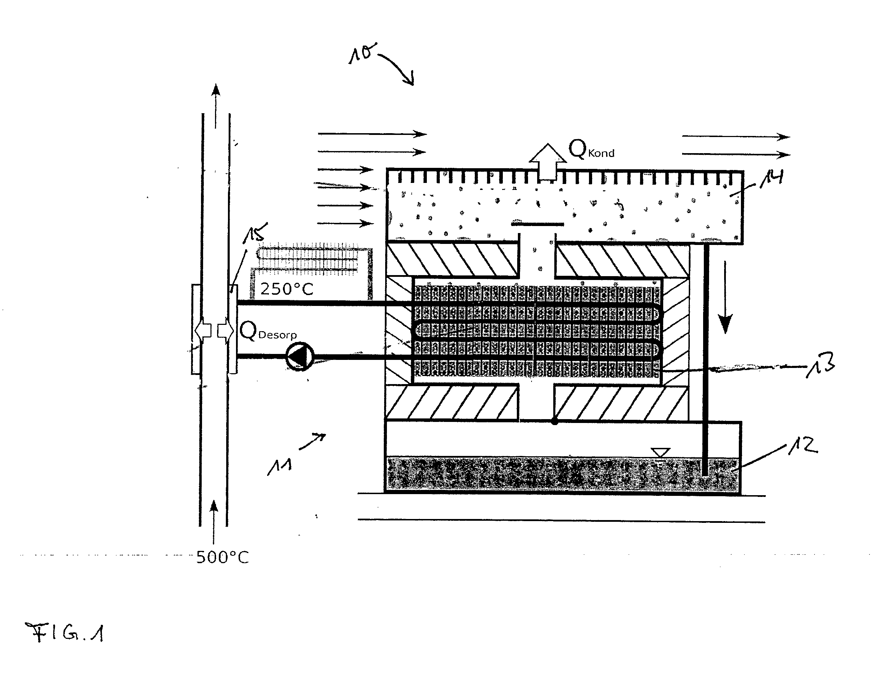

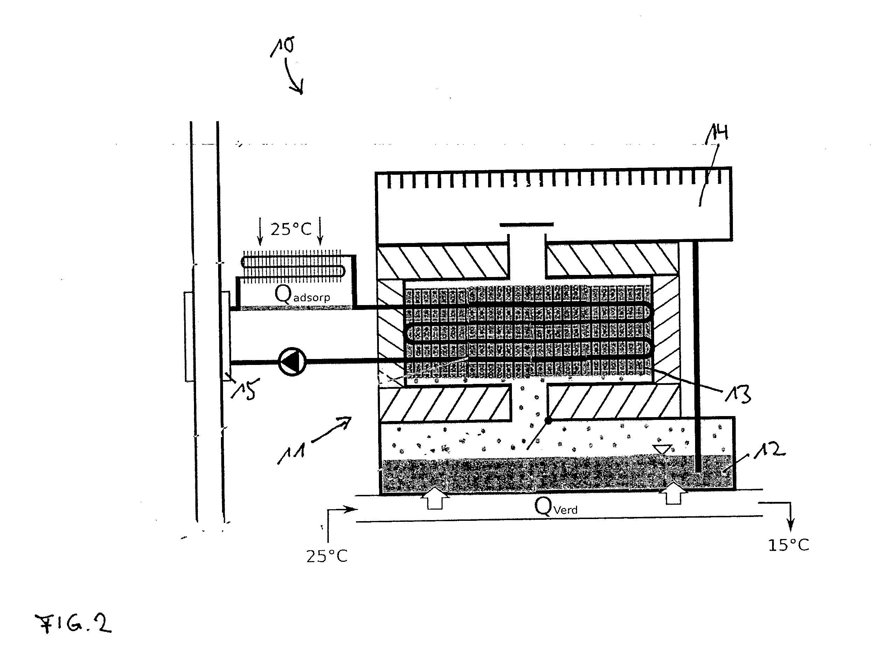

Die erfindungsgemäße Anordnung bezieht sich auf eine Einrichtung zur Klimatisierung eines Innenraumes eines Fahrzeuges, einer Maschine, eines Gebäudes od. dgl. und ist generell mit 10 bezeichnet. Es ist dazu in der Fig. 1 der Zeichnung die erfindungsgemäße Einrichtung zur Klimatisierung eines Innenraumes z.B. eines Fahrzeuges in einer schematischen Prinzipdarstellung während der Regeneration und in der Fig. 2 der Zeichnung während der Adsorption dargestellt. Es weist dabei z.B. das Fahrzeug einen Adsorber- oder Absorber- Wärmepumpenkreislauf 11 mit Verdampfer 12, Energiespeicher 13 und Kondensator 14 auf, wobei die dem Innenraum z.B. des Fahrzeuges zuzuführende Luft am Verdampfer 12 abkühlbar ist und der Kondensator 14 eine Abwärme aufweist, wobei der Energiespeicher 13 mit Zeolith- Granulat gefüllt ausgebildet ist, siehe beispielsweise die Fig. 1 der Zeichnung.

Es ist dabei erfindungsgemäß vorgesehen, dass die Abgaswärmeübertragung der Antriebs- oder sonstigen Verbrennungsmaschine über wenigstens einen Wärmeübertrager 15 zur Einbringung von Wärme in den mit Zeolith- Granulat gefüllten Energiespeicher 13 ausgebildet ist. Auf diese Weise wird erstmalig mit einfachen Mitteln eine Einrichtung 10 zur Klimatisierung eines Innenraumes z.B. eines Fahrzeuges geschaffen, bei der bei der thermischen Generation die Desorption der Zeolithe durch Abgaswärme erfolgt, d.h.. es entsteht kein zusätzlicher Energieaufwand, so dass kein Eingriff in die bestehende Fahrzeugtechnik notwendig ist. Der Vorteil besteht hier also insbesondere in der Nutzung der Abgaswärme von Antriebs- oder sonstigen Verbrennungsmaschinen zur Trocknung des Zeolith-Silikagel-Materials. Die bei den Antriebs- oder sonstigen Verbrennungsmaschinen entstehenden Abgase werden also nicht wie sonst üblich ohne weitere Nutzung an die Umwelt abgegeben. Es wird hier vielmehr diese Wärme über geeignete Wärmetauscher 15 dem Abgasstrom entnommen, und zur Desorption (Regeneration des Zeolith-Silikalgel-Materials) nach Heizen oder Kühlen z.B. einer Kabine genutzt. Da die Abgaswärme beim Betrieb der Antriebs- oder sonstigen Verbrennungsmaschinen zwangsläufig anfällt, ist hier keine weitere, den Wirkungsgrad verschlechternde oder zusätzlich kostenintensiv zu erzeugende Energie erforderlich. Der Vorteil eines solchen Systemes ist, dass nach Abstellen der Antriebs- oder sonstigen Verbrennungsmaschinen über einen langen Zeitraum z.B. eine Kabine zu klimatisieren ist.

Es kann dabei die erfindungsgemäße Einrichtung 10 zwei unabhängig arbeitende mit Zeolith- Granulat gefüllte Energiespeicher 13 aufweisen. Bei dieser Ausführungsform kann je einer der Energiespeicher 13, je nach Ladezustand, auch schon während des Betriebes der Antriebsmaschine zur Kühlung und damit zur Entlastung der Klimaanlage genutzt werden.

Weiterhin kann die erfindungsgemäße Einrichtung 10 zur Abgabe der entstehenden Abwärme an die Umgebung ausgebildet sein, in diesem Fall wird die entstehende Abwärme allerdings ungenutzt abgeführt. Diese Ausführungsform ist in den Figuren der Zeichnung gezeigt.

In Abweichung davon kann vorgesehen sein, dass die erfindungsgemäße Einrichtung 10 zur Wiederzuführung der Abwärme an den Kreislauf ausgebildet ist. Dadurch wird der Wirkungsgrad noch zusätzlich verbessert. In abgewandelter Ausführung kann vorgesehen sein, dass die erfindungsgemäße Einrichtung 10 zur Zuführung der Abwärme zwecks Aufheizung wenigstens eines hier nicht dargestellten separaten Wärmespeichers ausgebildet ist. Dieser separate Wärmespeicher kann ggfs. als latenter Wärmespeicher die Heizung unterstützen, wenn die Verbrennungsmaschine nicht arbeitet.

Die vorliegende Erfindung bezieht sich außerdem auf ein Verfahren zur Klimatisierung eines solchen Innenraumes eines Fahrzeuges, einer Maschine, eines Gebäudes od. dgl., insbesondere eines Führerhauses eines Lastkraftwagen. Dabei ist erfindungsgemäß vorgesehen, dass zur Einbringung von Wärme in den mit Zeolith- Granulat gefüllten Energiespeicher 13 die Abgaswärmeübertragung der Antriebs- oder sonstigen Verbrennungsmaschine über wenigstens einen Wärmeübertrager 15 erfolgt. Hier kann analog zur erfindungsgemäßen Einrichtung 10 die Energiespeicherung über zwei unabhängig arbeitende mit Zeolith- Granulat gefüllte Energiespeicher 13 erfolgen. Es kann dabei vorgesehen sein, dass eine Abgabe der entstehenden Abwärme an die Umgebung erfolgt, alternativ kann vorgesehen sein, dass eine Wiederzuführung der entstehenden Abwärme an den Kreislauf erfolgt oder dass eine Zuführung der Abwärme zwecks Aufheizung wenigstens eines separaten Wärmespeichers erfolgt.

Bezüglich der Funktionsweise der erfindungsgemäßen Einrichtung 10 sei folgendes ergänzt:

In der Fig. 1 der Zeichnung wird das Abgas in Pfeilrichtung z.B. mit einer Temperatur von 500° über eine hier nicht bezeichnete Abgasleitung durch einen (Abgas-) Wärmeübertrager 15 geführt. Dieser überträgt die Wärme hier unter Zwischenschaltung einer nicht bezeichneten Heizschlange an den mit Zeolith- Granulat gefüllten Energiespeicher 13. Das Zeolith treibt dann durch die Zuführung der Wärme das Wasser in Richtung Kondensator 15 aus und der Energiespeicher 13 wird geladen. Wenn das Zeolith- Granulat getrocknet ist, ist der Energiespeicher 13 geladen. Der Kondensator 15 gibt dann Wärme z.B. über die in Fig. 1 mit mehreren Pfeilen angedeutete Fahrtluftkühlung ab und es wird Kondensat in Pfeilrichtung über einen nicht bezeichneten Kondensatablauf dem Verdampfer 12 zugeführt. Nach Abschalten des Motors öffnet sich am Verdampfer 12 in Richtung Energiespeicher 13 ein hier nicht bezeichnetes Kläppchen, das Wasser gelangt in den Energiespeicher 13 und es wird dort Hitze freigesetzt. Weiteres Wasser wird angesaugt so dass im Verdampfer 12 Verdunstungskälte entsteht, über die die Raumluft in Pfeilrichtung z.B. von 25° auf 15° abgekühlt werden kann.

Wie bereits erwähnt, sind die dargestellten Ausführungsformen nur eine beispielsweise Verwirklichung der Erfindung. Diese ist nicht darauf beschränkt, es sind vielmehr noch mancherlei Abänderungen und Ausbildungen möglich. So sind insbesondere Abwandlungen in der konstruktiven Ausbildung der erfindungsgemäßen Einrichtung 10 zur Klimatisierung eines Innenraumes eines Fahrzeuges, einer Maschine, eines Gebäudes od. dgl. denkbar.

### Bezugszeichenliste:

10. Einrichtung zur Klimatisierung
11. Adsorber- oder Absorber- Wärmepumpenkreislauf
12. Verdampfer (von 11)
13. Energiespeicher (von 11)
14. Kondensator (von 11)
15. Wärmeübertrager

## Patentansprüche

1. Einrichtung 10 zur Klimatisierung eines Innenraumes eines Fahrzeuges, einer Maschine, eines Gebäudes od. dgl., insbesondere eines Führerhauses eines Lastkraftwagen, wobei z.B. das Fahrzeug einen Adsorber- oder Absorber- Wärmepumpenkreislauf 11 mit wenigstens einem Verdampfer 12, Energiespeicher 13 und Kondensator 14 aufweist, wobei die dem Innenraum z.B. des Fahrzeuges zuzuführende Luft am Verdampfer 12 abkühlbar ist und der Kondensator 14 eine Abwärme aufweist, wobei der Energiespeicher 13 mit Zeolith- Granulat gefüllt ausgebildet ist, **dadurch gekennzeichnet, dass** die Abgaswärmeübertragung der Antriebs- oder sonstigen Verbrennungsmaschine über wenigstens einen Wärmeübertrager 15 zur Einbringung von Wärme in den mit Zeolith- Granulat gefüllten Energiespeicher 13 ausgebildet ist.

2. Einrichtung nach Anspruch 1, **dadurch gekennzeichnet, dass** die Einrichtung 10 zwei unabhängig arbeitende mit Zeolith- Granulat gefüllte Energiespeicher 13 aufweist.

3. Einrichtung nach Anspruch 1 oder 2, **dadurch gekennzeichnet, dass** die Einrichtung 10 zur Abgabe der entstehenden Abwärme an die Umgebung ausgebildet ist.

4. Einrichtung nach Anspruch 1 oder 2, **dadurch gekennzeichnet, dass** die Einrichtung 10 zur Wiederzuführung der Abwärme an den Kreislauf ausgebildet ist.

5. Einrichtung nach Anspruch 1 oder 2, **dadurch gekennzeichnet, dass** die Einrichtung 10 zur Zuführung der Abwärme zwecks Aufheizung wenigstens eines separaten Wärmespeichers ausgebildet ist.

6. Verfahren zur Klimatisierung eines Innenraumes eines Fahrzeuges, einer Maschine, eines Gebäudes od. dgl., insbesondere eines
Führerhauses eines Lastkraftwagen, wobei z.B. das Fahrzeug einen Adsorber- oder Absorber- Wärmepumpenkreislauf 11 mit wenigstens einem Verdampfer 12, Energiespeicher 13 und Kondensator 14 aufweist, über den die dem Innenraum z.B. des Fahrzeuges zuzuführende Luft am Verdampfer 12 abkühlbar ist und bei dem der Kondensator 14 eine Abwärme aufweist, und bei dem Energie über einen mit Zeolith- Granulat gefüllten Energiespeicher 13 gespeichert wird, **dadurch gekennzeichnet, dass** zur Einbringung von Wärme in den mit Zeolith- Granulat gefüllten Energiespeicher 13 die Abgaswärmeübertragung der Antriebs- oder sonstigen Verbrennungsmaschine über wenigstens einen Wärmeübertrager 15 erfolgt.

7. Verfahren nach Anspruch 6, **dadurch gekennzeichnet, dass** die Energiespeicherung über zwei unabhängig arbeitende mit Zeolith-Granulat gefüllte Energiespeicher 13 erfolgt.

8. Verfahren nach Anspruch 6 oder 7, **dadurch gekennzeichnet, dass** eine Abgabe der entstehenden Abwärme an die Umgebung erfolgt.

9. Verfahren nach Anspruch 6 oder 7, **dadurch gekennzeichnet, dass** eine Wiederzuführung der entstehenden Abwärme an den Kreislauf erfolgt.

10. Verfahren nach Anspruch 6 oder 7, **dadurch gekennzeichnet, dass** eine Zuführung der Abwärme zwecks Aufheizung wenigstens eines separaten Wärmespeichers erfolgt.
